# EUROPEAN PATENT APPLICATION

(11) **EP 4 844 461 A1**
(43) Date of publication of application: **25.11.2026**
(21) Application number: 26175331.3
(22) Date of filing: 29.04.2026
(51) Int. Cl.: G02B 6/132, G02B 6/136, G02B 6/12, G02B 6/122, G02B 6/134

(54) **FABRICATION METHODS FOR LOW-LOSS WAVEGUIDE PLATFORM BASED ON DOPED OXYNITRIDE WITH DUAL PURPOSE ANNEAL**

(30) Priority: 21.05.2025 US 202519214660
(71) Applicant: HONEYWELL INTERNATIONAL INC., Charlotte, NC 28202 (US)
(72) Inventor: PUCKETT, Matthew Wade, Charlotte 28202 (US); HOYT, Chad, Charlotte 28202 (US); TIN, Steven, Charlotte 28202 (US); WU, Jianfeng, Charlotte 28202 (US); NELSON, Karl D., Charlotte 28202 (US)
(74) Representative: Haseltine Lake Kempner LLP

(57) **Abstract**

A method of fabricating a low-loss waveguide platform comprises providing a substrate wafer layer having a top surface with a thermal oxide layer formed thereon; depositing a doped oxynitride layer over the thermal oxide layer; and defining at least one optical waveguide in the doped oxynitride layer. The method performs a first anneal of the substrate wafer layer and the optical waveguide in an atmosphere comprising nitrogen, oxygen, or argon, such that hydrogen is substantially removed, and the optical waveguide is caused to reflow. This leads to reduced absorption and scattering losses by the optical waveguide. An upper cladding layer is deposited over the optical waveguide and the thermal oxide layer after the first anneal. The method then performs a second anneal in an atmosphere comprising nitrogen, oxygen, or argon, such that hydrogen is substantially removed from the upper cladding layer.

## Description

### CROSS-REFERENCE TO RELATED APPLICATION

The present application claims benefit of U.S. Patent Application Serial No. 19/214,660 filed May 21, 2025 titled "FABRICATION METHODS FOR LOW-LOSS WAVEGUIDE PLATFORM BASED ON DOPED OXYNITRIDE WITH DUAL PURPOSE ANNEAL"; the entire contents of the aforementioned patent application is incorporated herein by reference as if set forth in its entirety.

### BACKGROUND

In integrated photonics, there is an ongoing need to produce waveguides with low propagation loss to support low-loss interconnects, narrow-linewidth filters, and optical resonators with high power enhancement for the leveraging of desirable nonlinear processes.

### SUMMARY

A method of fabricating a low-loss waveguide platform comprises providing a substrate wafer layer having a top surface with a thermal oxide layer formed thereon; depositing a doped oxynitride layer over the thermal oxide layer; and defining at least one optical waveguide in the doped oxynitride layer. The method performs a first anneal of the substrate wafer layer and the at least one optical waveguide in an atmosphere comprising nitrogen, oxygen, or argon, such that hydrogen is substantially removed, and the at least one optical waveguide is caused to reflow. This leads to reduced absorption and scattering losses by the at least one optical waveguide. An upper cladding layer is deposited over the at least one optical waveguide and the thermal oxide layer after the first anneal. The method then performs a second anneal in an atmosphere comprising nitrogen, oxygen, or argon, such that hydrogen is substantially removed from the upper cladding layer.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a flow diagram of a method for fabricating a low-loss waveguide platform, according to one implementation; and
Figure 2 illustrates schematic side views of a fabrication process for producing a low-loss waveguide platform, according to one exemplary approach.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

Various fabrication methods for a low-loss waveguide platform based on doped oxynitride with a dual purpose anneal, are described herein.

In an exemplary fabrication process for producing a low-loss waveguide platform, the process begins with an initial wafer composed of a thermal oxide layer on a substrate. A doped oxynitride layer is deposited over the wafer, and an optical waveguide is defined in the doped oxynitride layer such as through an etch process. After a post-etch cleaning, the wafer is annealed at a high temperature in an atmosphere of nitrogen, oxygen, or argon. This high-temperature anneal drives hydrogen out of the wafer material, reducing absorption loss. The high-temperature anneal also causes the etched waveguide to reflow, owing to the reduced glass transition temperature of the oxynitride. The reflowed waveguide leads to reduced scattering losses. Finally, an upper cladding layer is deposited on top of the reflowed waveguide, and a final anneal can be performed in oxygen, nitrogen, or argon to drive hydrogen out of the cladding layer.

Various optical devices can be produced by using, at least in part, the present fabrication methods. For example, an optical device comprising a low-loss waveguide platform can be formed by the fabrication methods described herein.

The present approach provides waveguide platforms that support lower optical signal loss than in conventional waveguide platforms. The low-loss waveguide platform according to the present approach can be used in various devices that rely on low-loss integrated photonics, such as inertial sensors and chemical sensors. For example, the low-loss waveguide platform can be used in inertial sensors that use chip-scale optical gyroscopes.

Further details of various embodiments are described hereafter and with reference to the drawings.

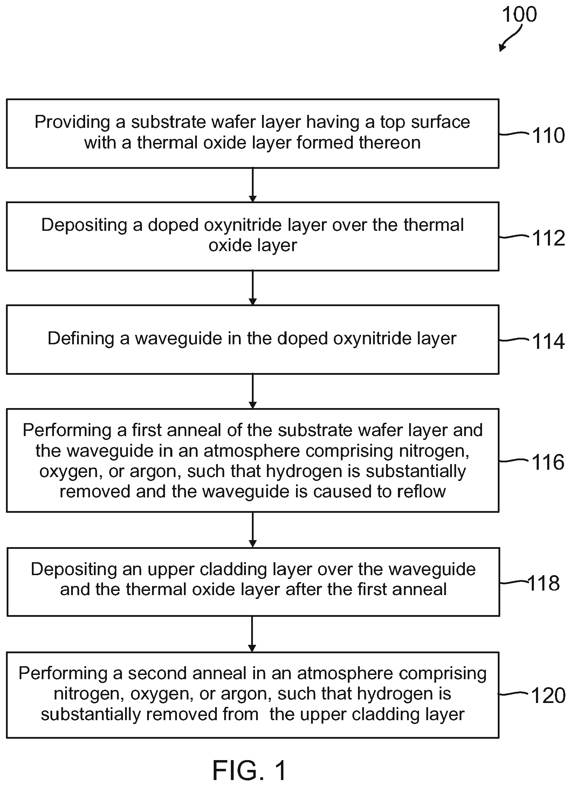

Figure 1 is a flow diagram of a method 100 for fabricating a low-loss waveguide platform, according to one implementation. The method 100 comprises providing a substrate wafer layer having a top surface with a thermal oxide layer formed thereon (block 110). The substrate wafer layer can be a silicon wafer or the like. The thermal oxide layer can comprise silicon dioxide or the like.

The method 100 proceeds by depositing a doped oxynitride layer over the thermal oxide layer (block 112). The doped oxynitride layer can comprise phosphorus-doped silicon oxynitride, boron-doped silicon oxynitride, or the like. The doped oxynitride layer can be deposited by a technique comprising plasma enhanced chemical vapor deposition (PECVD) or the like. The method 100 then defines at least one optical waveguide in the doped oxynitride layer (block 114). The optical waveguide can be defined by a standard lithography and etch process.

The method 100 next performs a first anneal of the substrate wafer layer and the optical waveguide in an atmosphere comprising nitrogen, oxygen, or argon, such that hydrogen is substantially removed and the optical waveguide is caused to reflow (block 116). This step leads to reduced absorption and scattering losses by the optical waveguide during use. An upper cladding layer is then deposited over the optical waveguide and the thermal oxide layer after the first anneal (block 118). The upper cladding layer can comprise silicon dioxide or the like. Thereafter, the method 100 can perform a second anneal in an atmosphere comprising nitrogen, oxygen, or argon, such that hydrogen is substantially removed from the upper cladding layer (block 120).

The method 100 produces a low-loss waveguide platform including at least one optical waveguide embedded in a final cladding layer defined by the thermal oxide layer and the upper cladding layer. The low-loss waveguide platform can be incorporated into various optical devices such as those used in low-loss integrated photonics.

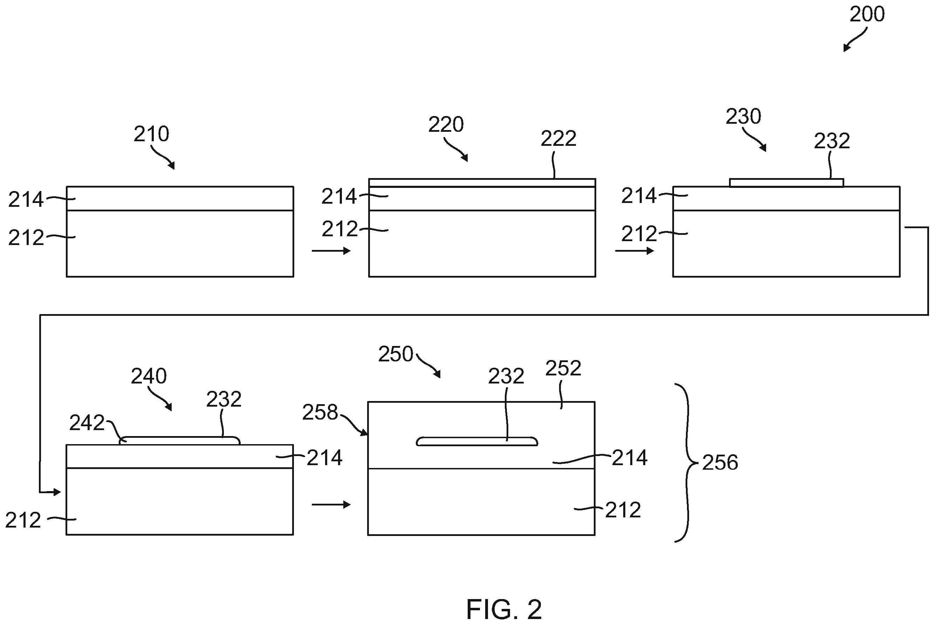

Figure 2 illustrates schematic side views of a fabrication process 200 for producing a low-loss waveguide platform, according to one exemplary approach. As shown at 210, an initial substrate wafer 212 is provided that has a top surface with a thermal oxide layer 214 formed thereon. The substrate wafer 212 can be a silicon wafer or the like. The thermal oxide layer 214 can be formed using standard oxidation processes of the substrate wafer 212, and can comprise silicon dioxide or the like. The thermal oxide layer can be formed to have a thickness of about 4 microns to about 20 microns. In one embodiment, the substrate wafer 212 can be coupled to or part of a photonics chip.

As depicted at 220, the fabrication process 200 forms a doped oxynitride layer 222 over the thermal oxide layer 214. The doped oxynitride layer 222 can comprise phosphorus-doped silicon oxynitride, boron-doped silicon oxynitride, or the like. The doped oxynitride layer 222 can be deposited on the thermal oxide layer 214 by PECVD or the like. The doped oxynitride layer 222 can be formed to have a thickness of about 4 microns to about 20 microns.

As shown at 230, the fabrication process 200 next defines an optical waveguide 232 from the doped oxynitride layer 222 over the thermal oxide layer 214. The optical waveguide 232 can be defined by a standard lithography and etch process, such as ultraviolet (UV) lithography and reactive ion etching. In one embodiment, the optical waveguide 232 can be substantially parallel to the top surface of the substrate wafer 212.

After a post-etch cleaning, the fabrication process 200, at 240, performs a first anneal at a high-temperature of the substrate wafer 212 with the thermal oxide layer 214 and the optical waveguide 232. This high-temperature anneal is done in an atmosphere comprising nitrogen, oxygen, or argon. The high-temperature anneal is performed at a temperature of about 900 °C to about 1150 °C, such as for a time period of about 15 minutes to about 2 hours.

The high-temperature anneal substantially drives hydrogen out of the wafer material, reducing absorption loss of an optical signal. This effect is enhanced by the doping of the waveguide material, such as by using phosphorus-doped silicon oxynitride. The high-temperature anneal also causes the optical waveguide 232 to reflow (shown at 242), owing to the reduced glass transition temperature of the oxynitride material of the optical waveguide 232, as well as the doping such as phosphorus doping. The reflow of the optical waveguide 232 leads to reduced scattering losses of an optical signal.

As shown at 250, the fabrication process 200 then forms an upper cladding layer 252 over the optical waveguide 232 and the thermal oxide layer 214, such as by a standard deposition process (e.g., PECVD). The upper cladding layer 252 can comprise silicon dioxide, aluminum oxide, or the like. Thereafter, the fabrication process 200 can perform a second anneal in an atmosphere comprising nitrogen, oxygen, or argon, such that hydrogen is substantially removed from the upper cladding layer 252. The second anneal can be performed at a temperature of about 900 °C to about 1150 °C, such as for a time period of about 15 minutes to about 2 hours. This results in a low-loss waveguide platform 256 including the optical waveguide 232 embedded in a final cladding layer 258 defined by the thermal oxide layer 214 and the upper cladding layer 252.

While the fabrication process 200 shows the fabrication of a single optical waveguide, it should be understood that this process can used to form multiple optical waveguides in a low-loss waveguide platform.

### Example Embodiments

Example 1 includes a method comprising: providing a substrate wafer layer having a top surface with a thermal oxide layer formed thereon; depositing a doped oxynitride layer over the thermal oxide layer; defining at least one optical waveguide in the doped oxynitride layer; performing a first anneal of the substrate wafer layer and the at least one optical waveguide in an atmosphere comprising nitrogen, oxygen, or argon, such that hydrogen is substantially removed and the at least one optical waveguide is caused to reflow, leading to reduced absorption and scattering losses by the at least one optical waveguide; depositing an upper cladding layer over the at least one optical waveguide and the thermal oxide layer after the first anneal; and performing a second anneal in an atmosphere comprising nitrogen, oxygen, or argon, such that hydrogen is substantially removed from the upper cladding layer.

Example 2 includes the method of Example 1, wherein the at least one optical waveguide is embedded in a final cladding layer defined by the thermal oxide layer and the upper cladding layer, which provide a low-loss waveguide platform.

Example 3 includes the method of any of Examples 1-2, wherein the at least one optical waveguide is substantially parallel to the top surface of the substrate wafer layer.

Example 4 includes the method of any of Examples 1-3, wherein the substrate wafer layer comprise a silicon wafer; and the thermal oxide layer comprises silicon dioxide.

Example 5 includes the method of any of Examples 1-4, wherein the doped oxynitride layer comprises phosphorus-doped silicon oxynitride, or boron-doped silicon oxynitride.

Example 6 includes the method of any of Examples 1-5, wherein the doped oxynitride layer is deposited by a technique comprising plasma enhanced chemical vapor deposition (PECVD).

Example 7 includes the method of any of Examples 1-6, wherein the at least one optical waveguide is defined by a lithography and etch process.

Example 8 includes the method of any of Examples 1-7, wherein the at least one optical waveguide is defined by ultraviolet lithography and reactive ion etching.

Example 9 includes the method of any of Examples 1-8, wherein the first anneal is performed at a temperature of about 900 °C to about 1150 °C.

Example 10 includes the method of any of Examples 1-9, wherein the first anneal is performed for a time period of about 15 minutes to about 2 hours.

Example 11 includes the method of any of Examples 1-10, wherein the upper cladding layer comprises silicon dioxide.

Example 12 includes the method of any of Examples 1-11, wherein the second anneal is performed at a temperature of about 900 °C to about 1150 °C.

Example 13 includes the method of any of Examples 1-12, wherein the second anneal is performed for a time period of about 15 minutes to about 2 hours.

Example 14 includes the method of any of Examples 1-13, wherein the substrate wafer layer is coupled to or part of a photonics chip.

Example 15 includes an optical device comprising a low-loss waveguide platform, which is formed by the method of Example 1.

Example 16 includes an optical device comprising: a low-loss waveguide platform, which is formed by a method comprising: providing a substrate wafer layer having a top surface with a thermal oxide layer formed thereon; depositing a doped oxynitride layer over the thermal oxide layer; defining at least one optical waveguide in the doped oxynitride layer; performing a first anneal of the substrate wafer layer and the at least one optical waveguide in an atmosphere comprising nitrogen, oxygen, or argon, such that hydrogen is substantially removed and the at least one optical waveguide is caused to reflow, leading to reduced absorption and scattering losses by the at least one optical waveguide; depositing an upper cladding layer over the at least one optical waveguide and the thermal oxide layer after the first anneal; and performing a second anneal in an atmosphere comprising nitrogen, oxygen, or argon, such that hydrogen is substantially removed from the upper cladding layer; wherein the at least one optical waveguide is embedded in a final cladding layer defined by the thermal oxide layer and the upper cladding layer; wherein the at least one optical waveguide is substantially parallel to the top surface of the substrate wafer layer.

Example 17 includes the optical device of Example 16, wherein: the substrate wafer layer comprise a silicon wafer; the thermal oxide layer comprises silicon dioxide; and the upper cladding layer comprises silicon dioxide.

Example 18 includes the optical device of any of Examples 16-17, wherein the doped oxynitride layer comprises phosphorus-doped silicon oxynitride, or boron-doped silicon oxynitride.

Example 19 includes the optical device of any of Examples 16-18, wherein the substrate wafer layer is coupled to a photonics chip.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A method comprising:
providing a substrate wafer layer having a top surface with a first thermal oxide layer formed thereon;
depositing a doped oxynitride layer over the thermal oxide layer;
defining at least one optical waveguide in the doped oxynitride layer;
performing a first anneal of the substrate wafer layer and the at least one optical waveguide in an atmosphere comprising nitrogen, oxygen, or argon, such that hydrogen is substantially removed and the at least one optical waveguide is caused to reflow, leading to reduced absorption and scattering losses by the at least one optical waveguide;
depositing an upper cladding layer over the at least one optical waveguide and the thermal oxide layer after the first anneal; and
performing a second anneal in an atmosphere comprising nitrogen, oxygen, or argon, such that hydrogen is substantially removed from the upper cladding layer.

2. The method of claim 1, wherein the at least one optical waveguide is embedded in a final cladding layer defined by the thermal oxide layer and the upper cladding layer, which provide a low-loss waveguide platform.

3. The method of claim 1, wherein the at least one optical waveguide is substantially parallel to the top surface of the substrate wafer layer.

4. The method of claim 1, wherein:
the substrate wafer layer comprise a silicon wafer; and
the thermal oxide layer comprises silicon dioxide.

5. The method of claim 1, wherein the doped oxynitride layer comprises phosphorus-doped silicon oxynitride, or boron-doped silicon oxynitride.

6. The method of claim 1, wherein the doped oxynitride layer is deposited by a technique comprising plasma enhanced chemical vapor deposition (PECVD).

7. The method of claim 1, wherein the at least one optical waveguide is defined by a lithography and etch process.

8. The method of claim 1, wherein the at least one optical waveguide is defined by ultraviolet lithography and reactive ion etching.

9. The method of claim 1, wherein the first anneal is performed at a temperature of about 900 °C to about 1150 °C, and for a time period of about 15 minutes to about 2 hours.

10. The method of claim 1, wherein the upper cladding layer comprises silicon dioxide.

11. The method of claim 1, wherein the second anneal is performed at a temperature of about 900 °C to about 1150 °C, and for a time period of about 15 minutes to about 2 hours.

12. The method of claim 1, wherein the substrate wafer layer is coupled to or part of a photonics chip.

13. An optical device comprising:
a low-loss waveguide platform, which is formed by the method of claim 1.

14. An optical device comprising:
a low-loss waveguide platform, which is formed by a method comprising:
providing a substrate wafer layer having a top surface with a thermal oxide layer formed thereon;
depositing a doped oxynitride layer over the thermal oxide layer;
defining at least one optical waveguide in the doped oxynitride layer;
performing a first anneal of the substrate wafer layer and the at least one optical waveguide in an atmosphere comprising nitrogen, oxygen, or argon, such that hydrogen is substantially removed and the at least one optical waveguide is caused to reflow, leading to reduced absorption and scattering losses by the at least one optical waveguide;
depositing an upper cladding layer over the at least one optical waveguide and the thermal oxide layer after the first anneal; and
performing a second anneal in an atmosphere comprising nitrogen, oxygen, or argon, such that hydrogen is substantially removed from the upper cladding layer;
wherein the at least one optical waveguide is embedded in a final cladding layer defined by the thermal oxide layer and the upper cladding layer;
wherein the at least one optical waveguide is substantially parallel to the top surface of the substrate wafer layer.

15. The optical device of claim 14, wherein the substrate wafer layer is coupled to a photonics chip.
